# EUROPÄISCHE PATENTSCHRIFT

(11) **EP 0 699 294 B1**
(45) Veröffentlichungstag und Bekanntmachung des Hinweises auf die Patenterteilung: **30.09.1998**
(21) Anmeldenummer: 95911335.8
(22) Anmeldetag: 15.03.1995
(51) Int. Cl.: G01B 3/46, G01B 5/12, G01B 7/13, G01B 5/252, G01B 7/287

(54) **BOHRUNGSMESSDORN**
DRILLING PLUG GAUGE
MANDRIN DE CONTROLE D'ALESAGE

(30) Priorität: 22.03.1994 DE 4409802
(43) Veröffentlichungstag der Anmeldung: 06.03.1996
(73) Patentinhaber: Hacmann, Hartmut, 64807 Dieburg (DE)
(72) Erfinder: Hacmann, Hartmut, 64807 Dieburg (DE)
(74) Vertreter: Katscher, Helmut, Dipl.-Ing.
(86) Internationale Anmeldenummer: EP9500961
(87) Internationale Veröffentlichungsnummer: WO9525939

(56) Entgegenhaltungen:
- CH-A- 218 397
- GB-A- 612 457
- PATENT ABSTRACTS OF JAPAN Bd. 12, Nr. 394 (P-773) 20 Oktober 1988 & JP,A,63 135 802 (TOYOTAMOTOR CORP.) 08 Juni 1988

## Beschreibung

Die Erfindung betrifft einen Bohrungsmeßdorn für mehrere, axial gegeneinander versetzte Meßstellen, mit einem Meßdorn-Grundkörper, in dem an jeder Meßstelle jeweils mindestens ein radial beweglicher Meßtaster gelagert ist, deren radiale Bewegung jeweils über Umlenkmechanismen in eine axiale Verschiebung eines Schubgliedes umgesetzt wird, wobei jedes Schubglied mit einem Wegmeßinstrument verbunden ist.

Derartige Bohrungsmeßdorne dienen dazu, die Durchmesser oder Lage- bzw. Formtoleranzen von Bohrungen an mehreren axial gegeneinander versetzten Meßstellen zu bestimmen. Solche Messungen sind insbesondere bei Stufenbohrungen erforderlich, bei denen die aufeinanderfolgenden Bohrungsstufen unterschiedliche Durchmesser aufweisen.

Zum Vermessen von Bohrungsdurchmessern sind Innenmikrometer bekannt, bei denen die Bewegung einer axial angeordneten Mikrometerschraube über einen Umlenkmechanismus in radiale Verschiebungen von üblicherweise drei Meßtastern umgesetzt wird. Diese Innenmikrometer sind nur dazu bestimmt, einzelne Messungen von Hand vorzunehmen. Zum Vermessen einer Stufenbohrung müssen alle Bohrungsstufen nacheinander von Hand vermessen werden. CH-A- 218 397 offenbart einen Mikrometer, bei dem eine zweite Serie von Meßtastern zur axialen Einstellung angeordnet ist.

Bohrungsmeßdorne weisen in der herkömmlichen Ausführungsform zwei an einem gabelförmigen Federkörper angebrachte Meßtaster auf, die bei einem Aufspreitzen des Federkörpers nach außen geschwenkt werden, um sich an den zu vermessenden Flächen anzulegen. Die Spreizbewegung des gabelförmigen Federkörpers wird über einen Umlenkmechanismus auf ein axial bewegliches Schubglied übertragen, dessen Bewegung mit einem Wegmeßelement erfaßt wird, beispielsweise einer Meßuhr oder einem induktiven Meßtaster.

Auch mit diesen herkömmlichen Bohrungsmeßdornen kann in einer Stufenbohrung jeweils nur eine einzelne Bohrungsstufe vermessen werden. Insbesondere für einen automatisierten Meßvorgang ist es jedoch erwünscht, alle Bohrungsstufen einer Stufenbohrung gleichzeitig zu vermessen. Wenn hierzu mehrere Bohrungsmeßdorne für die einzelnen Bohrungsstufen in einem gemeinsamen Meßdorn-Grundkörper zusammengefaßt werden, so müssen die einzelnen Bohrungsmeßdorne hierbei exzentrisch angeordnet werden. Diese exzentrische Anordnung führt dazu, daß eine radiale Verlagerung einen Meßfehler verursacht. Es ist deshalb erforderlich, diese für mehrere Meßstellen bestimmten Bohrungsmeßdorne in radial exakter Ausrichtung in die Stufenbohrung einzuführen. Dies ist bei vielen Meßaufgaben nicht oder nur mit erheblichem Aufwand möglich.

Aufgabe der Erfindung ist es daher, einen Bohrungsmeßdorn der eingangs genannten Gattung so auszubilden, daß er bei einfachem und kompaktem Aufbau eine gleichzeitige Messung an mehreren, axial gegeneinander gesetzten Meßstellen ermöglicht. Eine Abweichung von der zentrischen Ausrichtung des Bohrungsmeßdorns in der Bohrung soll dabei ohne Einfluß auf die Meßgenauigkeit sein.

Diese Aufgabe wird erfindungsgemäß dadurch gelöst, daß die Meßtaster radial verschiebbar im Grundkörper gelagerte Taststifte sind, daß die Schubglieder konzentrisch und teleskopartig im Grundkörper beweglich geführt sind, und daß jedes Schubglied an seinem den Meßtastern abgekehrten Ende mit einem der Wegmeßelemente in Verbindung steht.

Durch die teleskopartige Anordnung der Schubglieder wird erreicht, daß alle Schubglieder für alle Meßstellen konzentrisch im Grundkörper angeordnet sind, so daß die Taststifte im Grundkörper so gelagert werden können, daß sie exakt radial beweglich geführt werden. Dadurch werden Meßungenauigkeiten durch eine Schwenkbewegung der Meßtaster und/oder durch eine außermittige Anordnung der zugeordneten Schubglieder mit ihren Umlenkmechanismen vermieden. Zugleich ergibt sich ein kompakter Aufbau, der es ermöglicht, den Bohrungsmeßdorn auch für verhältnismäßig kleine Nenndurchmesser als Mehrstellen-Bohrungsmeßdorn auszuführen.

Vorteilhafte Ausgestaltungen des Erfindungsgedankens sind Gegenstand von Unteransprüchen.

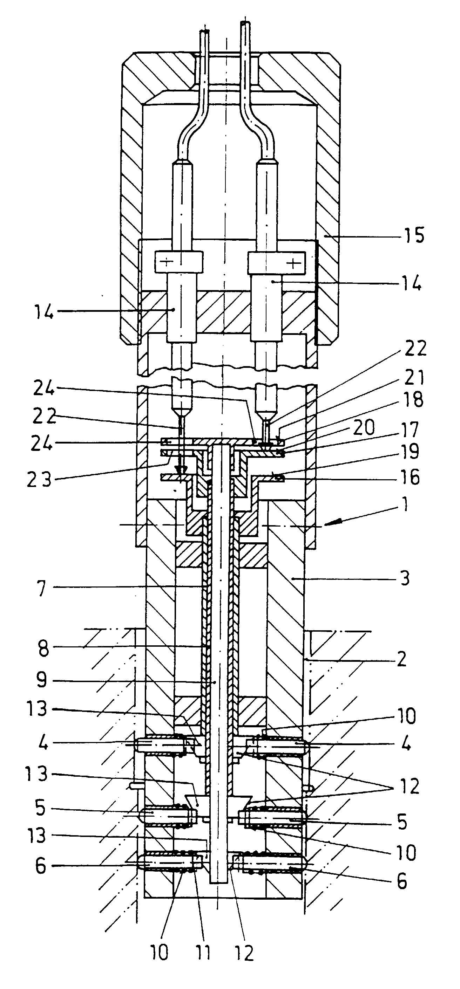

Nachfolgend wird ein Ausführungsbeispiel der Erfindung näher erläutert, das in der Zeichnung dargestellt ist.

Die Zeichnung zeigt einen Längsschnitt durch einen Bohrungsmeßdorn 1, der dazu dient, eine in der Zeichnung nur angedeutete Stufenbohrung 2 an drei axial gegeneinander versetzten Meßstellen zu vermessen.

In einem Meßdorn-Grundkörper 3, der bei dem dargestellten Ausführungsbeispiel im wesentlichen als Hohlzylinder ausgeführt ist, sind an jeder Meßstelle drei Taststifte 4, 5 bzw. 6 radial verschiebbar im Grundkörper 3 gelagert. Jeder Taststift 4, 5 bzw. 6 bildet einen Meßtaster, der mit seinem radial äußeren, abgerundeten Ende an der zu vermessenden Bohrungswand anliegt.

Konzentrisch im Grundkörper 3 sind drei Schubglieder 7, 8 und 9 axial beweglich aufgenommen. Die Schubglieder 7, 8 und 9 sind konzentrisch zueinander und teleskopartig ineinander angeordnet. Das innerste Schubglied 9, das der axial äußersten Meßstelle (Taststifte 6) zugeordnet ist, ist eine zentrale Schubstange. Die beiden übrigen Schubglieder 7 und 8 sind konzentrisch und teleskopartig dazu angeordnete Schubhülsen.

Jeder Taststift 4, 5 und 6 wird durch eine darauf angeordnete Schraubendruckfeder 10, die sich einerseits am Grundkörper 3 und andererseits an einem Sprengring 11 auf dem Taststift 4, 5 bzw. 6 abstützt, federnd radial nach innen gegen eine Schrägfläche 12 gedrückt, die mit dem jeweils zugeordneten Schubglied 7, 8 bzw. 9 verbunden ist.

Bei dem dargestellten Ausführungsbeispiel werden die Schrägflächen 12 jeweils von der Außenkante einer Klinge 13 gebildet. Alle Klingen 13 liegen jeweils in Achsschnittebenen des Bohrungsmeßdorns 1 und sind mit dem jeweils zugeordneten Schubglied 7, 8 bzw. 9 fest verbunden. Die Klingen 13 ragen mit ihrer die Schrägfläche 12 bildenden Außenkante jeweils in einen Schlitz am inneren Ende des Taststifts 4, 5 bzw. 6. Auf diese Weise wird eine axiale Bewegung der Schubglieder 7, 8 bzw. 9 über die Schrägflächen 12 in eine radiale Verschiebung der Taststifte 4, 5 bzw. 6 umgesetzt.

Die axiale Verschiebung der Schubglieder 7, 8 und 9 stellt somit ein Maß für die radiale Verschiebung der Taststifte 4, 5 bzw. 6 dar. Die axiale Verschiebung der Schubglieder 7, 8 und 9 wird durch Wegmeßelemente 14 erfaßt, beispielsweise induktive Meßtaster, die in einem Gehäuse 15 an dem den Meßstellen abgekehrten Ende des Grundkörpers 1 angeordnet sind.

Jedes Schubglied 7, 8 und 9 trägt an seinem den Meßtaster 4, 5 und 6 abgekehrten Ende einen Flansch 16, 17 bzw. 18. Jeder Flansch 16, 17 bzw. 18 bildet eine Stirnfläche 19, 20, die von einem Tastglied 22 jeweils eines der Wegmeßelemente 14 angetastet wird.

Bei dem dargestellten Ausführungsbeispiel sind nur die Wegmeßelemente 14 für die beiden Flansche 16 und 17 gezeigt. Man erkennt, daß das Tastglied 22, das die Stirnfläche 19 des untersten Flansches 16 antastet, durch Bohrungen 23 und 24 der beiden übrigen Flansche 17 und 18 hindurchragt. Das Tastglied 22, das den Flansch 17 antastet, ragt durch eine Bohrung 24 des darüber angeordneten Flansches 18.

Wenn der Bohrungsmeßdorn 1 aus der Bohrung 2 zurückgezogen wird, drücken die Tastglieder 22 der Wegmeßelemente 14 federnd auf die Schubglieder 7, 8 und 9, die nach unten, d.h. zu den Taststiften 4, 5 und 6 hin verschoben werden. Über die Schrägflächen 12 werden die Taststifte 4, 5 und 6 gegen die Kraft der Druckfedern 10 nach außen in ihre Ausgangsstellung bewegt.

Mit der beschriebenen Ausführung von Bohrungsmeßdornen ist es auch möglich, kegelförmige Bohrungen zu vermessen oder eine Rotationsmessung durchzuführen. An jeder Meßstelle können zwei oder drei Taststifte 4, 5 bzw. 6 vorgesehen werden, so daß sowohl eine Zweipunktmessung als auch Dreipunktmessung möglich ist.

Werden an jeder Meßstelle jeweils zwei Taststifte vorgesehen, so kann in einer Zweipunktmessung auch eine ovale Bohrungsform vermessen werden. Bei der Verwendung von drei oder mehr Taststiften kann eine polygonale Bohrungsform vermessen werden. Auch Form- bzw. Lagetoleranzen können auf diese Weise gemessen werden.

Es ist auch möglich, an jeder Meßstelle nur einen radial beweglichen Taststift vorzusehen, wobei an der jeweils gegenüberliegenden Seite eine feste Abstützung des Grundkörpers 3 an der zu vermessenden Bohrungswand erfolgt.

## Patentansprüche

1. Bohrungsmeßdorn (1) für die Messung von mehreren, axial gegeneinander versetzten Meßstellen, mit einem Meßdorn-Grundkörper (3), in dem an mehreren axial unterschiedlichen Positionen jeweils mindestens ein radial beweglicher Meßtaster (4,5,6) gelagert sind, deren radiale Bewegung jeweils über Umlenkmechanismen in eine axiale Verschiebung eines Schubgliedes (7,8,9) umgesetzt wird, wobei jedes Schubglied mit je einem Wegmeßelement (14) verbunden ist, dadurch gekennzeichnet, daß die Meßtaster radial verschiebbar im Grundkörper (3) gelagerte Taststifte (4, 5 und 6) sind, daß die Schubglieder (7, 8 und 9) konzentrisch und teleskopartig im Grundkörper (3) beweglich geführt sind, und daß jedes Schubglied (7, 8 bzw. 9) an seinem den Meßtastern abgekehrten Ende mit dem jeweiligen Wegmeßelement (14) in Verbindung steht.

2. Bohrungsmeßdorn nach Anspruch 1, dadurch gekennzeichnet, daß das an der axial äußersten Position gelagerte Schubglied (9) eine zentrale Schubstange ist und daß die übrigen Schubglieder (7, 8) konzentrisch und teleskopartig dazu angeordnete Schubhülsen sind.

3. Bohrungsmeßdorn nach Anspruch 1, dadurch gekennzeichnet, daß jedes Schubglied (7, 8 bzw. 9) an seinem den Meßtastern abgekehrten Ende eine Stirnfläche (19, 20 bzw. 21) aufweist, die von einem Tastglied (22) jeweils eines der Wegmeßelemente (14) angetastet wird.

4. Bohrungsmeßdorn nach Anspruch 3, dadurch gekennzeichnet, daß jeweils ein mit dem Schubglied (7, 8 bzw. 9) verbundener Flansch (16, 17 bzw. 18) die vom Tastglied (22) abgetastete Stirnfläche (19, 20 bzw. 21) bildet.

5. Bohrungsmeßdorn nach Anspruch 1, dadurch gekennzeichnet, daß jeder Taststift (4, 5 bzw. 6) federnd radial nach innen gegen eine mit dem zugeordneten Schubglied (7, 8 bzw. 9) verbundene Schrägfläche (12) gedrückt wird.

6. Bohrungsmeßdorn nach Anspruch 5, dadurch gekennzeichnet, daß die Schrägflächen (12) jeweils von der Außenkante einer in einer Achsschnittebene des Bohrungsmeßdorns (1) liegenden Klinge (13) gebildet werden, die mit dem Schubglied (7, 8 bzw. 9) fest verbunden ist und in einen Schlitz am inneren Ende des Taststifts (4, 5 bzw. 6) ragt.

## Claims

1. Bore gauge (1) for measuring several axially offset messuring points, comprising a setting plug body (3) in which at least one radially displaceable probe (4, 5, 6) is mounted in each case at several axially different positions, the radial movement of said probes in each case is translated into the axial motion of a thrust member (7, 8, 9) vis conversion mechanisms, where each thrust member is connected in each case to a position messuring element (14), characterised in that the probes are radially displaceable feelers (4, 5 and 6) mounted in the body (3), that the thrust members (7, 8 or 9) move concentrically and telescopically in the body (3), and that each thrust member (7, 8 or 9) is connected, at its end furthest away from the probes, to the appropriate position measuring element (14).

2. Bore gauge according to claim 1, characterised in that the thrust member (9) mounted at the axially most extreme position is a central connecting rod and that the remaining thrust members (7, 8) are thrust sleeves arranged concentrically and telescopically in relation to the connecting rod.

3. Bore gauge according to claim 1, characterised in that each thrust member (7, 8 or 9) has an end face (19, 20 or 21) at its end furthest away from the feelers, said end face being touched by one probe member (22) of one of the position measuring elements (14).

4. Bore gauge according to claim 3, characterised in that, in each case, a flange (16, 17 or 18) connected to the thrust member (7, 8 or 9) forms the end face (19, 20 or 21) that is touched by the probe member (22).

5. Bore gauge according to claim 1, characterised in that each feeler (4, 5 or 6) is pressed by spring pressure radially inwards against an inclined surface (12) connected to the assigned thrust member (7, 8 or 9).

6. Bore gauge according to claim 5, characterised in that the inclined surfaces (12) are formed in each case by the outer edge of a blade (13) lying in an axial section plane of the bore gauge (1), said blade being permanently connected to the thrust member (7, 8 or 9) and projecting into a slit in the internal end of the feeler (4, 5 or 6).

## Revendications

1. Mandrin alésomètre (1) pour effectuer une mesure sur plusieurs points de mesure décalés axialement les uns des autres, comportant un corps de base (8) dans lequel est monté, dans plusieurs positions différentes axialement, respectivement au moins un palpeur de mesure (4, 5, 6) déplaçable axialement, dont le mouvement radial est converti respectivement, au moyen de mécanismes de changement de direction, en coulissement axial d'un élément de poussée (7, 8, 9), chaque élément de poussée étant relié respectivement à un élément de mesure de distance (14), caractérisé en ce que les palpeurs de mesure sont des palpeurs (4, 5 et 6) montés sur le corps de base (3) de manière à pouvoir coulisser radialement, en ce que les éléments de poussée (7, 8 et 9) sont guidés de manière à pouvoir se déplacer concentriquement et télescopiquement dans le corps de base (3) et en ce que chaque élément de poussée (7, 8 et 9) est en liaison avec l'élément de mesure de distance respectif (14) à son extrémité opposée aux palpeurs de mesure.

2. Mandrin alésomètre selon la revendication 1, caractérisé en ce que l'élément de poussée (9) monté dans la position la plus externe axialement est une tige de poussée centrale et en ce que les autres éléments de poussée (7 et 8) sont des douilles de poussée agencées concentriquement et télescopiquement par rapport à la tige.

3. Mandrin alésomètre selon la revendication 1, caractérisé en ce que chaque élément de poussée (7, 8 ou 9) présente à son extrémité opposée aux palpeurs une surface frontale (19, 20 ou 21) qui est palpée par un élément d'exploration (22) respectivement d'un des éléments de mesure de distance (14).

4. Mandrin alésomètre selon la revendication 3, caractérisé en ce qu'un collet (16, 17 ou 18) relié à l'élément de poussée (7, 8 ou 9) forme la surface frontale (19, 20 ou 21) palpée par l'élément d'exploration (22).

5. Mandrin alésomètre selon la revendication 1, caractérisé en ce que chaque palpeur (4, 5 ou 6) est pressé de manière élastique radialement vers l'intérieur contre une surface inclinée (12) reliée à l'élément de poussée (7, 8 ou 9) qui lui est associé.

6. Mandrin alésomètre selon la revendication 5, caractérisé en ce que les surfaces inclinées (12) sont formées respectivement par le bord externe d'un cliquet (13) qui se trouve dans un plan de section axiale du madrin alésomètre (1), cliquet qui est fixé à l'élément de poussée (7, 8 ou 9) et fait saillie dans une fente à l'extrémité interne du palpeur (4, 5 ou 6).
